# EUROPEAN PATENT APPLICATION

(11) **EP 4 429 066 A1**
(43) Date of publication of application: **11.09.2024**
(21) Application number: 22888896.2
(22) Date of filing: 14.07.2022
(51) Int. Cl.: H02J 7/00, H02J 3/32, H01M 10/44

(54) **CHARGING AND DISCHARGING CONTROL METHOD AND APPARATUS FOR ENERGY STORAGE SYSTEM, CONTROLLER, AND ENERGY STORAGE SYSTEM**

(30) Priority: 03.11.2021 CN 202111292376
(71) Applicant: Gree Electric Appliances, Inc. of Zhuhai, Zhuhai, Guangdong 519070 (CN)
(72) Inventor: LI, Heng, Zhuhai, Guangdong 519070 (CN); LI, Weijin, Zhuhai, Guangdong 519070 (CN); CHEN, Jinqi, Zhuhai, Guangdong 519070 (CN); LIN, Yunkai, Zhuhai, Guangdong 519070 (CN); ZENG, An, Zhuhai, Guangdong 519070 (CN); YANG, Chan, Zhuhai, Guangdong 519070 (CN)
(74) Representative: Lavoix
(86) International application number: PCT/CN2022/105738
(87) International publication number: WO 2023/077861

(57) **Abstract**

The present disclosure relates to a charging and discharging control method and apparatus for an energy storage system, a controller, and an energy storage system. The method comprises: obtaining set target charging and discharging power; determining actual charging and discharging power on the basis of the target charging and discharging power according to a preset charging and discharging strategy, wherein the preset charging and discharging strategy takes the operating state and operating parameter of the energy storage system as consideration factors; multiplying the actual charging and discharging power by a preset percentage and then sending the actual charging and discharging power to an energy storage converter for execution, wherein the preset percentage is greater than zero and less than 100%; and sending, after a preset time, the actual charging and discharging power to the energy storage converter for execution.

## Description

### CROSS-REFERENCE TO RELATED APPLICATIONS

The present disclosure is based on and claims priority to China Patent Application No. 202111292376.0 filed on November 3, 2021, the disclosure of which is incorporated by reference herein in its entirety.

### TECHNICAL FIELD

The present disclosure relates to the field of energy storage technology, and in particular to a charging and discharging control method and apparatus for an energy storage system, a controller, and an energy storage system.

### BACKGROUND

In an energy storage system of EMS (Energy Management System), PCS (Power Conversion System) and BMS (Battery Management System) are important parts.

### SUMMARY

The present disclosure provides a charging and discharging control method and apparatus for an energy storage system, a controller, and an energy storage system, so as to solve the problem of device damage and increased charging cost resulting from an abrupt power rise during the charging and discharging process of PCS and the problem of battery protection during the charging and discharging process.

The above objects of the present disclosure are achieved by the following technical solutions.

In a first aspect according to embodiments of the present disclosure, a charging and discharging control method for an energy storage system is provided. The control method comprises: obtaining a target charging and discharging power which is set; determining an actual charging and discharge power based on the target charging and discharge power according to a preset charging and discharging strategy, wherein the preset charging and discharging strategy takes an operating state and an operating parameter of the energy storage system as consideration factors; sending the actual charging and discharging power multiplied by a preset percentage to a power conversion system for execution, wherein the preset percentage is greater than zero and less than 100%; and sending, after a preset time, the actual charging and discharging power to the power conversion system for execution.

In some embodiments, the sending, after a preset time, the actual charging and discharging power to the power conversion system for execution comprises: determining, after the preset time, the actual charging and discharging power again based on the target charging and discharging power according to the preset charging and discharging strategy; and sending the actual charging and discharging power determined again to the power conversion system for execution.

In some embodiments, the determining actual charging and discharge power based on the target charging and discharge power according to a preset charging and discharging strategy comprises: determining a power coefficient according to a charging and discharging state to be executed, whether a load is currently connected and a current state of charge of battery; and determining the actual charging and discharging power according to the target charging and discharging power and the power coefficient.

In some embodiments, the determining a power coefficient according to a charging and discharging state to be executed, whether a load is currently connected and a current state of charge of battery comprises: calculating, in a case where the charging and discharging state to be executed is a discharging state and a load is currently connected, a power ratio of a power of the connected load to the target charging and discharging power; determining a range where the current state of charge of battery is situated, and determining a correction coefficient of the power coefficient according to the range where the current state of charge of battery is situated; and determining the power coefficient according to the power ratio and the correction coefficient.

In some embodiments, the determining a power coefficient according to a charging and discharging state to be executed, whether a load is currently connected and a current state of charge of battery comprises: determining a range where the current state of charge of battery is situated, and determining a correction coefficient of the power coefficient according to the range where the current state of charge of battery is situated, in a case where the charging and discharging state to be executed is a discharging state and a load is not currently connected, or in a case where the charging and discharging state to be executed is a charging state; and determining the power coefficient according to the correction coefficient.

In some embodiments, the determining a correction coefficient of the power coefficient according to the range where the current state of charge of battery is situated comprises: when the charging and discharging state to be executed is the discharging state: determining the correction coefficient to be 0 in a case where the current state of charge of battery is less than a first preset capacity, determining the correction coefficient to be 0.5 in a case where the current state of charge of battery is between the first preset capacity and a second preset capacity, and determining the correction coefficient to be 1 in a case where the current state of charge of battery is greater than the second preset capacity.

In some embodiments, the determining a correction coefficient of the power coefficient according to the range where the current state of charge of battery is situated comprises: when the charging and discharging state to be executed is the charging state: determining the correction coefficient to be 1 in a case where the current state of charge of battery is less than a third preset capacity, determining the correction coefficient to be 0.5 in a case where the current state of charge of battery is between the third preset capacity and a fourth preset capacity, and determining the correction coefficient to be 0 in a case where the current state of charge of battery is greater than the fourth preset capacity.

In some embodiments, the determining a power coefficient according to a charging and discharging state to be executed, whether a load is currently connected and a current state of charge of battery comprises: determining the power coefficient to be 0 in a case where the current charging and discharging state to be executed is a stopping charging and discharging state.

In some embodiments, the preset percentage is 70%.

In a second aspect according to embodiments of the present disclosure, a charging and discharging control apparatus for an energy storage system is also provided. The apparatus comprises : an obtaining module configured to obtain a target charging and discharging power which is set; a determining module configured to determine an actual charging and discharge power based on the target charging and discharge power according to a preset charging and discharging strategy; and a sending module configured to send the actual charging and discharging power multiplied by a preset percentage to a power conversion system for execution, and send, after a preset time, the actual charging and discharging power to the power conversion system for execution, wherein the preset percentage is greater than zero and less than 100%.

In some embodiments, the sending module is further configured to: cause the determining module to determine, after the preset time, the actual charging and discharging power again based on the target charging and discharging power according to the preset charging and discharging strategy; and send the actual charging and discharging power determined again to the power conversion system for execution.

In some embodiments, the determining module is configured to: determine a power coefficient according to a charging and discharging state to be executed, whether a load is currently connected and a current state of charge of battery; and determine the actual charging and discharging power according to the target charging and discharging power and the power coefficient.

In some embodiments, the determining module is configured to: calculate, in a case where the charging and discharging state to be executed is a discharging state and a load is currently connected, a power ratio of a power of the connected load to the target charging and discharging power; determine a range where the current state of charge of battery is situated, and determine a correction coefficient of the power coefficient according to the range where the current state of charge of battery is situated; and determine the power coefficient according to the power ratio and the correction coefficient.

In some embodiments, the determining module is configured to: determine a range where the current state of charge of battery is situated, and determine a correction coefficient of the power coefficient according to the range where the current state of charge of battery is situated, in a case where the charging and discharging state to be executed is a discharging state and a load is not currently connected, or in a case where the charging and discharging state to be executed is a charging state; and determine the power coefficient according to the correction coefficient.

In some embodiments, the determining module is configured, when the charging and discharging state to be executed is a discharging state, to: determine the correction coefficient to be 0 in a case where the current state of charge of battery is less than a first preset capacity; determine the correction coefficient to be 0.5 in a case where the current state of charge of battery is between the first preset capacity and a second preset capacity; and determine the correction coefficient to be 1 in a case where the current state of charge of battery is greater than the second preset capacity.

In some embodiments, the determining module is configured, when the charging and discharging state to be executed is the charging state, to: determine the correction coefficient to be 1 in a case where the current state of charge of battery is less than a third preset capacity; determine the correction coefficient to be 0.5 in a case where the current state of charge of battery is between the third preset capacity and a fourth preset capacity; and determine the correction coefficient to be 0 in a case where the current state of charge of battery is greater than the fourth preset capacity.

In a third aspect according to embodiments of the present disclosure, a controller for an energy storage system is also provided. The controller comprises : a memory configured to store programs which are at least used for implementing the charging and discharging control method according to any of the embodiments in the first aspect; and a processor connected to the memory and configured to call and execute the programs stored in the memory.

In a fourth aspect according to embodiments of the present disclosure, an energy storage system is provided. The energy storage system comprises the controller for an energy storage system according to any of the embodiments in the third aspect.

In a fifth aspect according to embodiments of the present disclosure, a computer-readable storage medium is provided. The computer-readable storage medium comprises computer program instructions that, when executed by a processor, implement the method according to any of the above embodiments.

The technical solutions provided by the embodiments of the present disclosure may comprise the following beneficial effects:

In the technical solutions provided by the embodiments of the present disclosure, after a set target charging and discharging power is obtained, an actual charging and discharging power is determined based on the target charging and discharging power according to a preset charging and discharging strategy, and the actual charging and discharging power is multiplied by a preset percentage (greater than zero and less than 100%) is sent to the power conversion system for execution. Then, after a preset time, the actual charging and discharging power is sent to the power conversion system for execution. In this way, after a set target charging and discharging power is obtained, a corresponding actual charging and discharging power is determined first according to factors such as the operating state and operating parameter of the energy storage system, so that it is avoided that the charging and discharging power does not satisfy a system state, thereby achieving protection of a member such as a battery. Moreover, the operation of the power conversion system is controlled according to a stepped charging and discharging strategy. That is, in the beginning, the power conversion system operates only according to a certain percentage of the actual charging and discharging power, and then operates according to the actual charging and discharging power, thereby avoiding a problem such as device damage resulting from a power surge in a short time.

It should be understood that, the above general description and the following detailed description, which are merely exemplary and explanatory, cannot limit the present disclosure.

### BRIEF DESCRIPTION OF THE ACCOMPANYING DRAWINGS

The accompanying drawings, which are incorporated into this specification and constitute part of this specification, show the embodiments conforming to the present disclosure and serve to explain the principles of the present disclosure together with the specification.
Fig. 1 is a flowchart of a charging and discharging control method for an energy storage system provided by some embodiments of the present disclosure;
Fig. 2 is a flowchart of a charging and discharging control method for an energy storage system provided by other embodiments of the present disclosure;
Fig. 3 is a schematic structural view showing a charging and discharging control apparatus for an energy storage system provided by some embodiments of the present disclosure;
Fig. 4 is a schematic structural view showing a controller for an energy storage system provided by some embodiments of the present disclosure.

### DETAILED DESCRIPTION

Exemplary embodiments will be described in detail here, examples of which are illustrated in the accompanying drawings. When the following description relates to the accompanying drawings, the same numerals in different accompanying drawings represent the same or similar elements unless otherwise indicated. The implementations described in the following exemplary embodiments do not represent all the implementations consistent with the present disclosure. By contrary, they are merely examples of apparatus and methods consistent with some aspects of the present disclosure, as detailed in the appended claims.

The inventors have noticed that, PCS and BMS are yet to be adequately protected. During the charging and discharging process of PCS, neither the problem of increased device damage and charging cost resulting from an abrupt power rise nor the problem of battery protection during the charging and discharging process is considered.

In order to solve the problems mentioned above, also that is, the problem of increased device damage and charging cost resulting from an abrupt power rise during the charging and discharging process of PCS and the problem of battery protection during the charging and discharging process, the present disclosure provides a charging and discharging control method for an energy storage system, and a control apparatus applying the method, a controller and an energy storage system. First, a corresponding actual charging and discharging power is determined based on factors such as a target charging and discharging power set by an upper layer and the operating state and operating parameter of the energy storage system, so that it is avoided that the charging and discharging power does not satisfy a system state, thereby achieving protection of a member such as a battery. Next, the operation of the power conversion system is controlled based on a stepped charging and discharging strategy, so that a problem such as device damage resulting from a power surge in a short time is avoided. The specific implementation solutions will be described in detail by way of some embodiments below.

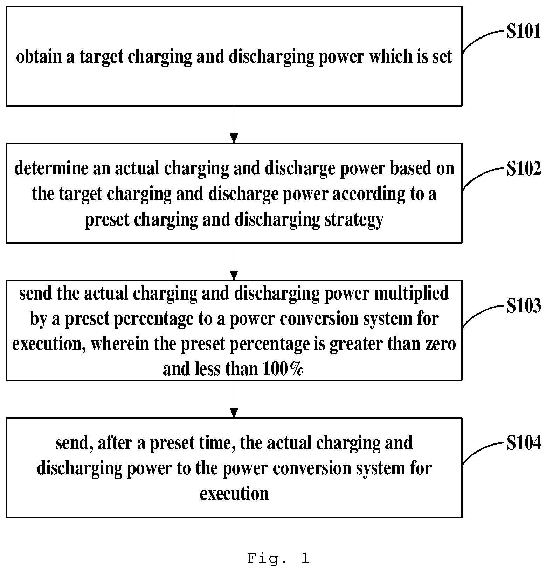

Referring to Fig. 1, Fig. 1 is a flowchart of a charging and discharging control method for an energy storage system provided by some embodiments of the present disclosure. The energy storage system mainly comprises an upper layer control device (for example, a server or a touch screen device and the like), BMS (Battery Management System), PCS (Power Conversion System), load and other device modules. The method is performed by a controller in the BMS for example.

As shown in Fig. 1, the method at least comprises the following steps.

In step S101, a target charging and discharging power which is set is obtained.

In some embodiments, the target charging and discharging power is sent to the controller by the upper layer control device. For example, the target charging and discharging power is set by a user through a touch screen device. For another example, the target charging and discharging power is determined by a server according to a preconfigured strategy and sent to the controller.

In step S102, an actual charging and discharging power is determined based on the target charging and discharging power according to a preset charging and discharging strategy. The preset charging and discharging strategy takes the operating state and the operating parameter of the energy storage system as consideration factors.

Specifically, the obtained target charging and discharging power might be inconsistent with factors such as an actual state of the energy storage system. If the system directly controls the operation of the PCS according to the obtained target charging and discharging power, the battery or other devices might be damaged. Therefore, in this step, the operating state and operating parameter of the energy storage system serve as factors taken into account, and a reasonable actual charging and discharging power is determined again based on the target charging and discharging power.

In some embodiments, the operating state and the operating parameter of the energy storage system comprise: a charging and discharging state to be executed, whether a load is currently connected, and a current state of charge (SOC) of battery. For example, the charging and discharging state to be executed comprises a charging state, a discharging state, and a stopping charging and discharging state. Of course, it should be understood that, in actual application, in addition to the parameters listed above, other parameters may also be considered to determine the actual charging and discharging power, and it is not limited thereto.

Correspondingly, in some embodiments, the step S102 comprises determining a power coefficient according to the charging and discharging state to be executed, whether a load is currently connected, and the current state of charge of battery; and determining the actual charging and discharging power according to the target charging and discharging power and the power coefficient.

In this way, first, a power coefficient is determined according to the charging and discharging state to be executed, whether a load is currently connected, and the current state of charge of battery. The power coefficient is used to correct the target charging and discharging power which is set, so as to obtain the actual charging and discharging power that can meet the system requirements, thereby realizing the protection of a member such as the battery, for example, avoiding the problem of overcharge and over-discharge. In some embodiments, the actual charging and discharging power is directly a product of the target charging and discharging power and the power coefficient, or further introduces other coefficients.

Further, some implementations of the step of determining the power coefficient according to the charging and discharging state to be executed, whether a load is currently connected, and the current state of charge of battery will be introduced below.

① As some implementations, in a case where the charging and discharging state to be executed is the discharging state and a load is currently connected, a power ratio of a power of the connected load to the target charging and discharging power is calculated; a range where the current state of charge of battery is situated is determined, and a correction coefficient of the power coefficient is determined according to the range where the current state of charge of battery is situated; and the power coefficient is determined according to the power ratio and the correction coefficient.

Specifically, if the discharging state is to be executed and a load is connected, it is indicated that power will be supplied to the connected load. Thus, a power needs to be matched with the power of the connected load (referring to a sum of power of all the connected loads), to avoid energy waste resulting from that the calculated actual discharge power is too high compared to the power of the load or insufficient energy supply resulting from that the calculated actual discharge power is too small compared to the load. In some embodiments, the ratio of the power of the load to the target charging and discharging power (also that is, the power ratio) is calculated so that both of them are associated and matched. Then, to realize the protection of the battery and avoid battery damage due to over-discharge, a required power coefficient is obtained by further correction according to the range where the state of charge of battery is situated. For example, a product of the above power ratio and the correction coefficient serves as the power coefficient.

② As other implementations, in a case where the charging and discharging state to be executed is the discharging state and a load is not currently connected, or the charging and discharging state to be executed is the charging state, a range where the current state of charge of battery is situated is determined, and a correction coefficient of the power coefficient is determined according to the range where the current state of charge of battery is situated; and the power coefficient is determined according to the correction coefficient. For example, the correction coefficient is equal to the power coefficient.

Specifically, if the discharging state is to be executed but a load is not connected, the reason why discharging is performed cannot be well determined. Therefore, compared with the case ①, the correction coefficient of the power coefficient is determined only according to the range where the current state of charge of battery is situated, and the power coefficient is further determined.

Similarly, if the charging state is to be executed, there is no need to consider whether there is a load. Likewise, the correction coefficient of the power coefficient is determined only according to the range where the current state of charge of battery is situated, and the power coefficient is further determined.

On the basis of the above solutions, further, implementations of determining the correction coefficient of the power coefficient according to the range where the current state of charge of battery is situated will be introduced below in conjunction with different embodiments.

As some implementations, when the charging and discharging state to be executed is the discharging state: in a case where the current state of charge of battery is less than a first preset capacity, the correction coefficient is determined to be 0; in a case where the current state of charge of battery is between the first preset capacity and a second preset capacity, the correction coefficient is determined to be 0.5; and in a case where the current state of charge of battery is greater than the second preset capacity, the correction coefficient is determined to be 1.

As other implementations, when the charging and discharging state to be executed is the charging state: in a case where the current state of charge of battery is less than a third preset capacity, the correction coefficient is determined to be 1; in a case where the current state of charge of battery is between the third preset capacity and a fourth preset capacity, the correction coefficient is determined to be 0.5; and in a case where the current state of charge of battery is greater than the fourth preset capacity, the correction coefficient is determined to be 0.

Specifically, for the discharging state, in a case where the current state of charge of battery is less than the first preset capacity, it is indicated that the state of charge is too low. Thus, the correction coefficient is determined to be 0, and the battery will not discharge, thereby realizing the protection of the battery from over-discharge. In a case where the current state of charge of battery is between the first preset capacity and the second preset capacity, it is indicated that the state of charge is low. Thus, the correction coefficient is determined to be 0.5, thereby reducing the discharge power (performing discharging with half a normal power) and prolonging the discharge time. In a case where the current state of charge of battery is greater than the second preset capacity, it is indicated that the state of charge is sufficient. Thus, the correction coefficient is determined to be 1, thereby performing discharging with the normal power. In some embodiments, the first preset capacity and the second preset capacity are 10% and 15% respectively.

The charging state is similar. In a case where the current state of charge of battery is less than the third preset capacity, it is indicated that the battery is far from fully charged. Thus, the correction coefficient is determined to be 1, thereby performing charging with a normal power. In a case where the current state of charge of battery is between the third preset capacity and the fourth preset capacity, it is indicated that the state of charge is sufficient and will be fully charged soon. Thus, the correction coefficient is determined to be 0.5, thereby reducing the charging power (performing charging with half the normal power) and further reducing the expense (during charging, the power grid charges based on charging power). However, in a case where the current state of charge of battery is greater than the fourth preset capacity, it is indicated that the battery is approximately fully charged. Thus, the correction coefficient is determined to be 0, and charging of the battery is stopped, thereby realizing protection of the battery from overcharge . In some embodiments, the third preset capacity and the fourth preset capacity are greater than the first preset capacity and the second preset capacity, for example, the third preset capacity and the fourth preset capacity are 85% and 95% respectively.

In step S103, the actual charging and discharging power multiplied by a preset percentage is sent to the power conversion system for execution. The preset percentage is greater than zero and less than 100%.

Specifically, after the actual charging and discharging power is determined in the previous step, if it is directly sent to the power conversion system for execution, it is possible to lead to a significant abrupt power rise (surging in a short time), and further result in a problem such as device damage in a discharging state and result in an increased charging cost in a charging state. On such basis, in this step, the actual charging and discharging power obtained in the previous step is multiplied by a preset percentage (greater than 0 and less than 100%, for example, 70%) and then sent to the power conversion system for execution. That is, the power conversion system operates only according to a certain percentage of the actual charging and discharging power, and the system is in a "transitional state" at this time. By way of this method, the power variation is reduced and various problems resulting from a power surge are avoided.

In step S104, after a preset time, the actual charging and discharging power is sent to the power conversion system for execution.

Specifically, after the system continues to operate for a preset time under the condition of the step S103, it is considered that the system enters a stable operation state, and at this time, the actual charging and discharging power is sent to the power conversion system for execution. The difference between the step S104 and the step S103 lies in that, the actual charging and discharging power sent to the power conversion system is no longer multiplied by a preset percentage. That is, the power conversion system operates directly according to the actual charging and discharging power, and the system completely enters a normal operation state at this time. Moreover, since the power conversion system currently operates based on the power sent by the controller in the step S103, when the power changes again, there is a slight variation. That is, there is no problem of a power surge . In other words, steps S103-S104 are performed so that the power conversion system realizes stepped charging and discharging (step-type charging and discharging), thereby avoiding several problems resulting from a power surge.

Further, in some embodiments, the step S104 specifically comprises determining, after the preset time, the actual charging and discharging power again based on the target charging and discharging power according to the preset charging and discharging strategy; and sending the actual charging and discharging power determined again to the power conversion system for execution.

Specifically, in actual application, after the system operates for the preset time under the condition of the step S103, parameters such as the range where the stage of charge is situated might change. Therefore, to make the charging and discharging process more reasonable and the power parameters more matched with the system state, in some embodiments, the actual charging and discharging power is determined again by using the same principle as in the step S102, and the actual charging and discharging power determined again is sent to the power conversion system for execution. That is, the actual charging and discharging power determined again might be the same as or different from the actual charging and discharging power determined in the step S102.

In addition, after the power change of the power conversion system is completed, that is, after the power during the stepped charging and discharging process is changed to 100% from a certain percentage (for example, 70%), the range where the state of charge of battery is situated is judged regularly, and on such basis, the actual charging and discharging power is further adjusted according to the principle of the step S102 to ensure stable, safe and reasonable operation of the system.

Based on the above solutions, after a set target charging and discharging power is obtained, a corresponding actual charging and discharging power is determined according to factors such as the operating state and the operating parameter of the energy storage system, so that it is avoided that the charging and discharging power does not satisfy a system state, thereby achieving protection of a member such as a battery. Moreover, the operation of the power conversion system is controlled according to a stepped charging and discharging strategy. That is, in the beginning, the power conversion system operates only according to a certain percentage of the actual charging and discharging power, and then operates according to the actual charging and discharging power, thereby avoiding a problem such as device damage resulting from a power surge in a short time.

In order to make the technical solutions of the present disclosure easier to understand, exemplary description will be made by a specific example below in conjunction with the accompanying drawings.

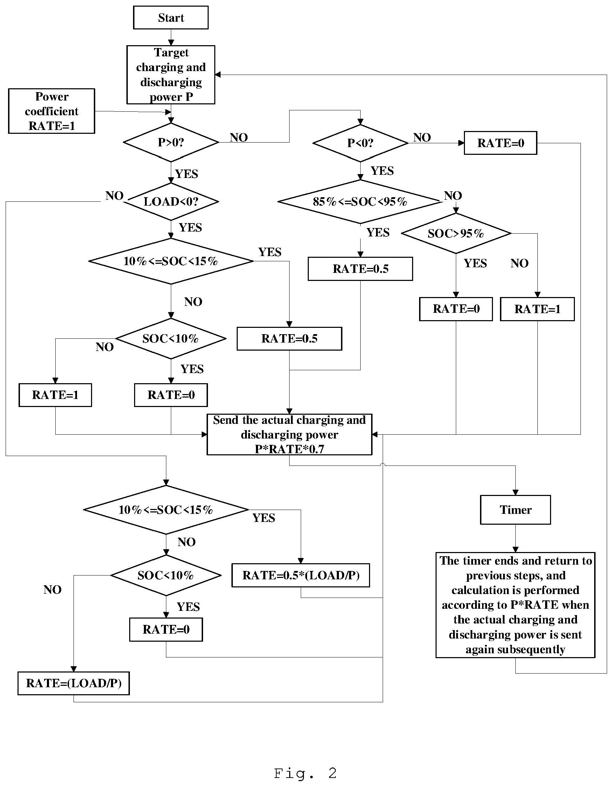

Referring to Fig. 2, Fig. 2 is a flowchart of a charging and discharging control method for an energy storage system provided by other embodiments of the present disclosure.

As shown in Fig. 2, in this example, first, a controller obtains a target charging and discharging power P set by the upper layer control device, and the default power coefficient rate=1 at this time. Then, the charging and discharging state to be executed is judged according to the target charging and discharging power P.

When P>0, it is indicated the discharging state is to be executed at this time, and subsequently, it is first judged whether a load is connected at this time.

If a load is connected (the power LOAD of the load>0), the power is matched with the power of the load (that is, LOAD/P is to be multiplied when the power coefficient RATE is calculated). That is, according to the range where SOC of battery is situated (a relative greatness relationship between SOC and 10% of the first preset capacity and 15% of the second preset capacity) and a stepped discharging strategy, a corresponding power coefficient RATE is first determined, and then the actual charging and discharging power to be sent to PCS is further determined. When the state of charge of battery is insufficient (for example, when "10%≤SOC≤15%" in Fig. 2 is judged to be YES), in order to avoid a too short time for the battery to discharge due to a too fast discharge, it is set such that RATE=0.5* (LOAD/P) . That is, performing discharging with half a normal power. When the state of charge of battery is very weak (for example, when "SOC<10%" in Fig. 2 is judged to be YES), in order to avoid battery damage due to over-discharge, it is directly set such that RATE=0 (stopping discharging) . When the battery is sufficient (for example, if "SOC<10%" in Fig. 2 is judged to be NO, it is indicated that SOC ^ 15% at this time), it is set such that RATE=1*(LOAD/P), and performing discharging at a normal discharging speed. Moreover, when there is a load, the power finally sent is 70% of the power of the load (that is, the actual charging and discharging power sent is P*RATE*0.7), with the purpose of preventing an instantaneous power surge.

If a load is not connected (LOAD<0), the range where SOC is situated is directly judged, and the actual charging and discharging power is then sent to PCS for execution according to the range where SOC is situated and a stepped charging and discharging strategy (70%) . The principle is the same as when there is a load, the only difference is that the LOAD/P is not multiplied when the RATE is calculated.

After that, a timer is started. After a delay of a preset time, the set target charging and discharging power P is judged according to the range where SOC is situated, and then 100% of P*RATE is sent to complete the stepped charging and discharging strategy.

When P<0, it is indicated that the charging state is to be executed at this time, and there is no need to consider whether there is a load in the charging state. Thus, a stepped charging is performed directly according to the range where SOC is situated (the principle is similar to the discharging without a load) . The stepped charging strategy in this state is more important because the power grid charges according to a power value executed by PCS during charging. When stepped charging is used, if the received power value directly surges above a set value, the charging expense will be increased. According to the stepped charging and discharging strategy, first, 70% of the actual charging power is sent, so that the power will not surge to a maximum value at this time. After the system power is stable, 100% of the actual charging and discharging power is sent to PCS, so that the normal operation of the system is ensured, and the problem of a power surge is avoided.

When P=0, a power 0 is directly sent to PCS to stop charging and discharging.

Then, after the actual charging and discharging power is sent (that is, after the stepped charging and discharging strategy is completely performed), a timer is started to judge the range where SOC is situated regularly. According to the range where SOC is situated, it is judged whether the value of the currently determined actual charging and discharging power multiplied by the set RATE is equal to the currently operating power of PCS. If YES, it is ignored. If NO, the actual charging and discharging power is calculated again based on the target charging and discharging power.

By way of the above solutions, stepped charging and discharging is realized, which avoids the problem of a power surge of PCS during the charging and discharging process, realizes protection of PCS and avoids a cost problem resulting from a power problem as well. Moreover, the charging and discharging power are adjusted according to the condition of the state of charge of battery, which protects BMS. The charging and discharging power are adjusted according to actual requirements of the load, which reduces the energy waste.

In addition, based on the same inventive concept, corresponding to the method according to the above embodiments, the embodiments of the present disclosure also provide a charging and discharging control apparatus for an energy storage system. The control apparatus is a functional module based on software and/or hardware in a device for performing the above method.

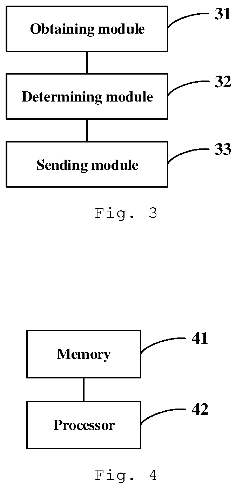

Referring to Fig. 3, Fig. 3 is a structural schematic view showing a charging and discharging control apparatus for an energy storage system provided by some embodiments of the present disclosure .

As shown in Fig. 3, the apparatus comprises: an obtaining module 31 configured to obtain a target charging and discharging power which is set; a determining module 32 configured to determine actual charging and discharge power based on the target charging and discharge power according to a preset charging and discharging strategy; and a sending module 33 configured to send the actual charging and discharging power multiplied by a preset percentage to a power conversion system for execution, and send, after a preset time, the actual charging and discharging power to the power conversion system for execution, wherein the preset percentage is greater than zero and less than 100%.

In some embodiments, the sending module 32 is further configured to cause the determining module 31 to determine, after a preset time, the actual charging and discharging power again based on the target charging and discharging power according to the preset charging and discharging strategy; and send the actual charging and discharging power determined again to the power conversion system for execution.

In some embodiments, when determining the actual charging and discharging power based on the target charging and discharging power according to the preset charging and discharging strategy, the determining module 32 is specifically configured to: determine a power coefficient according to a charging and discharging state to be executed, whether a load is currently connected and a current state of charge of battery; and determine the actual charging and discharging power according to the target charging and discharging power and the power coefficient.

In some embodiments, when determining the power coefficient according to the charging and discharging state to be executed, whether a load is currently connected, and the current state of charge of battery, the determining module 32 is specifically configured to: calculate, in a case where the charging and discharging state to be executed is a discharging state and a load is currently connected, a power ratio of a power of the connected load to the target charging and discharging power; determine a range where the current state of charge of battery is situated, and determine a correction coefficient of the power coefficient according to the range where the current state of charge of battery is situated; and determine the power coefficient according to the power ratio and the correction coefficient.

In some embodiments, when determining the power coefficient according to the charging and discharging state to be executed, whether a load is currently connected and the current state of charge of battery, the determining module 32 is further configured to: determine, in a case where the charging and discharging state to be executed is a discharging state and a load is not currently connected, or in a case where the charging and discharging state to be executed is a charging state a range where the current state of charge of battery is situated, and determine a correction coefficient of the power coefficient according to the range where the current state of charge of battery is situated; and determine the power coefficient according to the correction coefficient.

In some embodiments, when determining the correction coefficient of the power coefficient according to the range where the current state of charge of battery is situated, the determining module 32 is specifically configured, when the charging and discharging state to be executed is the discharging state, to: determine the correction coefficient to be 0 in a case where the current state of charge of battery is less than a first preset capacity; determine the correction coefficient to be 0.5 in a case where the current state of charge of battery is between the first preset capacity and a second preset capacity; and determine the correction coefficient to be 1 in a case where the current state of charge of battery is greater than the second preset capacity.

The determining module 32 is configured, when the charging and discharging state to be executed is the charging state, to: determine the correction coefficient to be 1 in a case where the current state of charge of battery is less than a third preset capacity; determine the correction coefficient to be 0.5 in a case where the current state of charge of battery is between the third preset capacity and a fourth preset capacity; and determine the correction coefficient to be 0 in a case where the current state of charge of battery is greater than the fourth preset capacity.

In some embodiments, when determining the power coefficient according to the charging and discharging state to be executed, whether a load is currently connected and the current state of charge of battery, the determining module 32 is further configured to determine the correction coefficient to be 0 in a case where the current charging and discharging state to be executed is a stopping charging and discharging state.

In some embodiments, the preset percentage is 70%.

For the specific implementation method for the steps performed by each functional module of the above apparatus, reference can be made to the corresponding content of the aforementioned method embodiments, which will not be described in detail here.

In addition, based on the same inventive concept, corresponding to the method for the above embodiments, the present disclosure also provides a controller for an energy storage system.

Referring to Fig. 4, Fig. 4 is a schematic structural view showing a controller for an energy storage system provided by some embodiments of the present disclosure.

As shown in Fig. 4, the controller comprises: a memory 41 and a processor 42 connected to the memory 41. The memory 41 is configured to store programs which are at least used for implementing the control method according to the aforementioned embodiments. The processor 42 is configured to call and execute the programs stored in the memory 41.

In addition, the embodiments of the present disclosure also provide an energy storage system comprising the controller. When the controller for an energy storage system is applied to the energy storage system, a corresponding control method can be implemented. Moreover, for the specific implementation method for the steps performed by the above programs, reference can be made to the corresponding content of the aforementioned method embodiments, which will not be described in detail here.

By way of the above solutions, stepped charging and discharging is realized, which avoids the problem of a power surge of PCS during the charging and discharging process, realizes protection of PCS and avoids a cost problem resulting from a power problem as well. Moreover, the charging and discharging power are adjusted according to the condition of the state of charge of battery, which protects BMS. The charging and discharging power are adjusted according to actual requirements of the load, which reduces the energy waste.

It can be understood that, for the same or similar parts in the above embodiments, reference can be made to each other, and for the content not explained in detail in some embodiments, reference can be made to the same or similar content in other embodiments.

It is to be noted that, in the description of the present disclosure, the terms such as "first" and "second" are only for illustrative purposes and shall not be understood as indicating or implying relative importance. In addition, in the description of the present disclosure, "a plurality of" means at least two unless otherwise specified.

Any process or method description in the flowchart or otherwise described here may be understood as a module, segment or part representing a code that comprises one or more executable instructions for implementing specific logical functions or steps of process. The scope of preferred embodiments of the present disclosure comprises additional implementations, wherein functions may be performed not according to the sequence shown or discussed, including in a substantially simultaneous manner or a reversed sequence according to the functions involved, which should be understood by those skilled in the technical field to which the embodiments of the present disclosure belong.

It should be understood that various parts of the present disclosure may be implemented in hardware, software, firmware or a combination thereof. In the above implementations, a plurality of steps or methods may be realized by software or firmware stored in a memory and performed by an appropriate instruction execution system. For example, if implemented by hardware, as in other implementations, it may be implemented by any of the following technologies commonly known in this field or a combination thereof: a discrete logic circuit with a logic gate circuit for realizing a logic function on a data signal, an application specific integrated circuit with a suitable combinational logic gate circuit, a programmable gate array (PGA), a field programmable gate array (FPGA), and the like.

Those skilled in the art can understand that implementing all or some of the steps carried by the method of the above embodiments may be accomplished by instructing related hardware by a program. The program may be stored in a computer-readable storage medium, and the program, when executed, implements one of the steps of the method embodiments or a combination thereof.

In addition, various functional units in various embodiments of the present disclosure may be integrated in one processing module, or each unit may be physically present alone, or two or more units may be integrated in one module. The above integrated modules may be realized in the form of hardware or realized in the form of functional modules of software. The integrated module may also be stored in a computer-readable storage medium when implemented in the form of functional modules of software and sold or used as an independent product.

The storage medium mentioned above may be a read-only memory, a magnetic disk or an optical disk, etc.

In the description of this specification, descriptions referring to the terms such as "an embodiment", "some embodiments", "example", "specific example" or "some examples" mean that specific features, structures, materials, or characteristics described in conjunction with this embodiment or example are comprised in at least an embodiment or example of the present disclosure. In this specification, the schematic expressions of the above terms do not necessarily refer to the same embodiment or example. Moreover, the specific features, structures, materials, or characteristics described may be combined in a suitable manner in any one or more embodiments or examples.

Although the embodiments of the present disclosure have been shown and described above, it can be understood that the above embodiments are exemplary and cannot be understood as limiting the present disclosure, and those skilled in the art can make changes, modifications, substitutions, and variations to the above embodiments within the scope of the present disclosure.

## Claims

1. A charging and discharging control method for an energy storage system, comprising:
obtaining a target charging and discharging power which is set;
determining an actual charging and discharge power based on the target charging and discharge power according to a preset charging and discharging strategy, wherein the preset charging and discharging strategy takes an operating state and an operating parameter of the energy storage system as consideration factors;
sending the actual charging and discharging power multiplied by a preset percentage to a power conversion system for execution, wherein the preset percentage is greater than zero and less than 100%; and
sending, after a preset time, the actual charging and discharging power to the power conversion system for execution.

2. The charging and discharging control method according to claim 1, wherein the sending, after a preset time, the actual charging and discharging power to the power conversion system for execution comprises:
determining, after the preset time, the actual charging and discharging power again based on the target charging and discharging power according to the preset charging and discharging strategy; and
sending the actual charging and discharging power determined again to the power conversion system for execution.

3. The charging and discharging control method according to claim 1, wherein the determining actual charging and discharge power based on the target charging and discharge power according to a preset charging and discharging strategy comprises:
determining a power coefficient according to a charging and discharging state to be executed, whether a load is currently connected and a current state of charge of battery; and
determining the actual charging and discharging power according to the target charging and discharging power and the power coefficient.

4. The charging and discharging control method according to claim 3, wherein the determining a power coefficient according to a charging and discharging state to be executed, whether a load is currently connected and a current state of charge of battery comprises:
calculating, in a case where the charging and discharging state to be executed is a discharging state and a load is currently connected, a power ratio of a power of the connected load to the target charging and discharging power;
determining a range where the current state of charge of battery is situated, and determining a correction coefficient of the power coefficient according to the range where the current state of charge of battery is situated; and
determining the power coefficient according to the power ratio and the correction coefficient.

5. The charging and discharging control method according to claim 3, wherein the determining a power coefficient according to a charging and discharging state to be executed, whether a load is currently connected and a current state of charge of battery comprises:
determining a range where the current state of charge of battery is situated, and determining a correction coefficient of the power coefficient according to the range where the current state of charge of battery is situated, in a case where the charging and discharging state to be executed is a discharging state and a load is not currently connected, or in a case where the charging and discharging state to be executed is a charging state; and
determining the power coefficient according to the correction coefficient.

6. The charging and discharging control method according to claim 5, wherein the determining a correction coefficient of the power coefficient according to the range where the current state of charge of battery is situated comprises:
when the charging and discharging state to be executed is the discharging state:
determining the correction coefficient to be 0 in a case where the current state of charge of battery is less than a first preset capacity,
determining the correction coefficient to be 0.5 in a case where the current state of charge of battery is between the first preset capacity and a second preset capacity, and
determining the correction coefficient to be 1 in a case where the current state of charge of battery is greater than the second preset capacity.

7. The charging and discharging control method according to claims 5 or 6, wherein the determining a correction coefficient of the power coefficient according to the range where the current state of charge of battery is situated comprises:
when the charging and discharging state to be executed is the charging state:
determining the correction coefficient to be 1 in a case where the current state of charge of battery is less than a third preset capacity,
determining the correction coefficient to be 0.5 in a case where the current state of charge of battery is between the third preset capacity and a fourth preset capacity, and
determining the correction coefficient to be 0 in a case where the current state of charge of battery is greater than the fourth preset capacity.

8. The charging and discharging control method according to any of claims 3 to 7, wherein the determining a power coefficient according to a charging and discharging state to be executed, whether a load is currently connected and a current state of charge of battery comprises:
determining the power coefficient to be 0 in a case where the current charging and discharging state to be executed is a stopping charging and discharging state.

9. The charging and discharging control method according to claim 1, wherein the preset percentage is 70%.

10. A charging and discharging control apparatus for an energy storage system, comprising:
an obtaining module configured to obtain a target charging and discharging power which is set;
a determining module configured to determine an actual charging and discharge power based on the target charging and discharge power according to a preset charging and discharging strategy; and
a sending module configured to send the actual charging and discharging power multiplied by a preset percentage to a power conversion system for execution, and send, after a preset time, the actual charging and discharging power to the power conversion system for execution, wherein the preset percentage is greater than zero and less than 100%.

11. The charging and discharging control apparatus according to claim 10, wherein the sending module is further configured to:
cause the determining module to determine, after the preset time, the actual charging and discharging power again based on the target charging and discharging power according to the preset charging and discharging strategy; and
send the actual charging and discharging power determined again to the power conversion system for execution.

12. The charging and discharging control apparatus according to claim 10, wherein the determining module is configured to:
determine a power coefficient according to a charging and discharging state to be executed, whether a load is currently connected and a current state of charge of battery; and
determine the actual charging and discharging power according to the target charging and discharging power and the power coefficient.

13. The charging and discharging control apparatus according to claim 12, wherein the determining module is configured to:
calculate, in a case where the charging and discharging state to be executed is a discharging state and a load is currently connected, a power ratio of a power of the connected load to the target charging and discharging power;
determine a range where the current state of charge of battery is situated, and determine a correction coefficient of the power coefficient according to the range where the current state of charge of battery is situated; and
determine the power coefficient according to the power ratio and the correction coefficient.

14. The charging and discharging control apparatus according to claim 12, wherein the determining module is configured to:
determine a range where the current state of charge of battery is situated, and determine a correction coefficient of the power coefficient according to the range where the current state of charge of battery is situated, in a case where the charging and discharging state to be executed is a discharging state and a load is not currently connected, or in a case where the charging and discharging state to be executed is a charging state; and
determine the power coefficient according to the correction coefficient.

15. The charging and discharging control apparatus according to claim 14, wherein the determining module is configured, when the charging and discharging state to be executed is a discharging state, to:
determine the correction coefficient to be 0 in a case where the current state of charge of battery is less than a first preset capacity;
determine the correction coefficient to be 0.5 in a case where the current state of charge of battery is between the first preset capacity and a second preset capacity; and
determine the correction coefficient to be 1 in a case where the current state of charge of battery is greater than the second preset capacity.

16. The charging and discharging control apparatus according to claims 14 or 15, wherein the determining module is configured, when the charging and discharging state to be executed is the charging state, to:
determine the correction coefficient to be 1 in a case where the current state of charge of battery is less than a third preset capacity;
determine the correction coefficient to be 0.5 in a case where the current state of charge of battery is between the third preset capacity and a fourth preset capacity; and
determine the correction coefficient to be 0 in a case where the current state of charge of battery is greater than the fourth preset capacity.

17. A controller for an energy storage system, comprising:
a memory configured to store programs which are at least used for implementing the charging and discharging control method according to any of claims 1 to 9; and
a processor connected to the memory and configured to call and execute the programs stored in the memory.

18. An energy storage system, comprising the charging and discharging control apparatus for the energy storage system according to any of claims 10 to 16, or comprising the controller for the energy storage system according to claim 18.

19. A computer-readable storage medium comprising computer program instructions that, when executed by a processor, implement the charging and discharging control method according to any of claims 1 to 9.
